(19) Europäisches Patentamt
European Patent Office
Office européen des brevets

(11) **EP 4 613 596 A1**

(12) **EUROPEAN PATENT APPLICATION**

(43) Date of publication:
**10.09.2025 Bulletin 2025/37**

(21) Application number: **24177973.5**

(22) Date of filing: **24.05.2024**

(51) International Patent Classification (IPC):
**B60W 50/00** (2006.01)  **B60C 11/24** (2006.01)

(52) Cooperative Patent Classification (CPC):
**B60W 50/0097;** B60C 11/246; B60W 2050/0094

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.03.2024 EP 24162040**
**07.03.2024 EP 24162020**

(71) Applicant: **VOLVO TRUCK CORPORATION**
**405 08 Göteborg (SE)**

(72) Inventors:
• **GHANDRIZ, Toheed**
**431 47 MÖLNDAL (SE)**
• **MOHAMMADI, Fatemeh**
**431 47 MÖLNDAL (SE)**
• **LAINE, Leo**
**414 84 GÖTEBORG (SE)**

(74) Representative: **Ström & Gulliksson AB**
**P.O. Box 4188**
**203 13 Malmö (SE)**

(54) **TYRE WEAR MANAGEMENT FOR A VEHICLE**

(57)    A computer system and computer-implemented method for determining a control input for a vehicle are provided, the method comprising: acquiring, by processing circuitry of a computer system, operational information relating to a manoeuvre of the vehicle; determining, by the processing circuitry, a cost associated with energy efficiency of one or more motion support devices of the vehicle performing the manoeuvre; determining, by the processing circuitry, a cost associated with tyre wear of the vehicle performing the manoeuvre; and determining, by the processing circuitry, a control input such that a cumulative cost of energy efficiency and tyre wear is below a threshold.

200

Acquire operational information related to a manoeuvre of the vehicle — 202

Acquire a cost associated with energy efficiency of one or more MSDs of the vehicle performing the manoeuvre — 204

Acquire a cost associated with with tyre wear of the vehicle performing the manoeuvre — 206

Determining a control input for the vehicle such that a cumulative cost of energy efficiency and tyre wear is below a threshold — 208

**FIG. 2**

**Description**

**TECHNICAL FIELD**

The disclosure relates generally to vehicle control. In particular aspects, the disclosure relates to tyre wear management for a vehicle. The disclosure can be applied in heavy-duty vehicles, such as trucks, buses, and construction equipment. In particular, the disclosure can be applied in multi-unit vehicle combinations with distributed propulsion and energy storage. Although the disclosure may be described with respect to a particular vehicle, the disclosure is not restricted to any particular vehicle.

**BACKGROUND**

In vehicle motion management, a control system of a vehicle may determine control signals for actuators of the vehicle in order to satisfy the requested global forces of the vehicle. For example, the control system may receive an input related to a manoeuvre for the vehicle and state information of the vehicle comprising motion parameters and determine control signals in the form of propulsion and braking instructions that meet the requested global forces of the vehicle subject to certain constraints, for example energy and safety constraints.

Many vehicles today are run with control requests that seek to meet a certain goal, for example fuel efficiency, safety, range, etc. However, tyre wear is not always taken into account. For example, if regenerative braking is prioritised and therefore torque is increased, tyre wear is also increased. This can result in a number of negative impacts, for example reduction of friction and increase of particulate emissions from the tyres. In this scenario, the benefits of regenerative braking will at some point be outweighed by the downsides of tyre wear.

It is therefore desired to develop a solution for vehicle motion management that addresses or at least mitigates some of these issues.

**SUMMARY**

This disclosure provides systems, methods and other approaches for determining control inputs for a vehicle that balance energy efficiency with tyre wear concerns. In particular, operational information relating to a manoeuvre of the vehicle, such as a current road inclination, an estimated vehicle mass, and/or a requested acceleration, is acquired. A cost associated with energy efficiency of one or more motion support devices of the vehicle performing the manoeuvre is determined. A cost associated with tyre wear of the vehicle performing the manoeuvre is also determined. A control input is determined based on these costs such that a cumulative cost of energy efficiency and tyre wear is below a threshold. In this way, it can be ensured that costs associated with energy efficiency and tyre wear are balanced appropriately when controlling motion of the vehicle.

According to a first aspect of the disclosure, there is provided a computer system for determining a control input for a vehicle, the computer system comprising processing circuitry configured to acquire operational information relating to a manoeuvre of the vehicle, and determine a cost associated with energy efficiency of one or more motion support devices of the vehicle performing the manoeuvre, determine a cost associated with tyre wear of the vehicle performing the manoeuvre, and determine a control input such that a cumulative cost of energy efficiency and tyre wear is below a threshold.

The first aspect of the disclosure may seek to provide a computer system that balances tyre wear with energy efficiency of a vehicle when controlling motion of the vehicle. The costs associated with energy efficiency and tyre wear can be in contradiction, meaning that reducing one can result in an increase of the other, depending on the vehicle, control strategy and road. By determining a control input for a vehicle that ensures a total cost associated with energy efficiency and tyre wear when performing a manoeuvre is below a threshold, it can be ensured that operation of the vehicle when performing the manoeuvre does not exceed the cost. This means that vehicle performance can be optimised in a certain way without overly compromising tyre performance and causing negative effects such as reduction of friction and increase of particulate emissions from the tyres.

Optionally in some examples, including in at least one preferred example, the operational information comprises a road inclination, an estimated vehicle mass, an estimated vehicle velocity, and/or a requested acceleration. A technical benefit may include that a control input for a vehicle can be determined that takes various different parameters of the manoeuvre into account, ensuring that various factors across the route are considered when balancing energy efficiency and tyre wear.

Optionally in some examples, including in at least one preferred example, the cost associated with energy efficiency of one or more motion support devices of the vehicle represents one or more of $CO_2$ emissions, electrical energy usage, and fuel consumption. A technical benefit may include that environmental and efficiency factors of the vehicle are included when determining the control input.

Optionally in some examples, including in at least one preferred example, the motion support devices comprise one or more electric machines, internal combustion engines, and/or service brakes. A technical benefit may include that a control input for a vehicle can be determined that takes various sources of propulsion or braking into account, ensuring that a robust assessment of the costs of energy efficiency is provided.

Optionally in some examples, including in at least one preferred example, the cost associated with tyre wear of the vehicle represents particulate emissions and/or friction loss from a tyre as a function of a longitudinal slip associated with the one or more wheels. A technical benefit may include that environmental and performance factors related to the tyres of the vehicle are taken into account, such that a control input can be determined based on such considerations.

Optionally in some examples, including in at least one preferred example, the cost associated with tyre wear of the vehicle is based on one or more of axle loads, tyre type, and tyre size. A technical benefit may include that factors that have a particular influence on tyre wear are taken into account, ensuring that a robust assessment of the costs of tyre wear is provided.

Optionally in some examples, including in at least one preferred example, the processing circuitry is configured to determine the control input using an optimisation function to minimise the cumulative cost. A technical benefit may include enhanced accuracy, robustness, and flexibility when determining the control input.

Optionally in some examples, including in at least one preferred example, the determined control input comprises a force input, a torque input, and/or a longitudinal slip input for one or more motion support devices of the vehicle. A technical benefit may include that the vehicle can be controlled based on parameters that have a particular influence on tyre wear, ensuring that the balance between tyre wear and energy efficiency can be controlled in a robust manner.

Optionally in some examples, including in at least one preferred example, the force input comprises a force from an electric machine, a force from a set of service brakes, and/or a total gear ratio associated with an electric machine. A technical benefit may include that the vehicle can be controlled in numerous different ways to meet the determined vehicle motion profile and provide the desired balance between energy efficiency and tyre wear.

Optionally in some examples, including in at least one preferred example, the determined control input comprises a respective control input for one or more axles of the vehicle. A technical benefit may include that the vehicle can be controlled on a more granular level in order to meet the determined vehicle motion profile and provide the desired balance between energy efficiency and tyre wear.

Optionally in some examples, including in at least one preferred example, the determined control input relates to one or more driven axles of the vehicle. A technical benefit may include that driven axles, where tyre wear caused by axial torque and/or longitudinal slip is especially higher, are controlled appropriately to meet the determined vehicle motion profile.

According to a second aspect of the disclosure, there is provided a vehicle comprising the computer system of any preceding claim. The second aspect of the disclosure may seek to provide a vehicle capable of being operated to balance tyre wear with energy efficiency of a vehicle when controlling motion of the vehicle.

According to a third aspect of the disclosure, there is provided a computer-implemented method for determining a control input for a vehicle, the method comprising acquiring, by processing circuitry of a computer system, operational information relating to a manoeuvre of the vehicle, determining, by the processing circuitry, a cost associated with energy efficiency of one or more motion support devices of the vehicle performing the manoeuvre, determining, by the processing circuitry, a cost associated with tyre wear of the vehicle performing the manoeuvre, and determining, by the processing circuitry, a control input such that a cumulative cost of energy efficiency and tyre wear is below a threshold.

The third aspect of the disclosure may seek to provide a computer-implemented method that balances tyre wear with energy efficiency of a vehicle when controlling motion of the vehicle. The costs associated with energy efficiency and tyre wear can be in contradiction, meaning that reducing one can result in an increase of the other, depending on the vehicle, control strategy and road. By determining a control input for a vehicle that ensures a total cost associated with energy efficiency and tyre wear when performing a manoeuvre is below a threshold, it can be ensured that operation of the vehicle when performing the manoeuvre does not exceed the cost. This means that vehicle performance can be optimised in a certain way without overly compromising tyre performance and causing negative effects such as reduction of friction and increase of particulate emissions from the tyres.

According to a fourth aspect of the disclosure, there is provided a computer program product comprising program code for performing, when executed by processing circuitry, the computer-implemented method of the third aspect. The fourth aspect of the disclosure may seek to enable new vehicles and/or legacy vehicles to be conveniently configured, by software installation/update, to balance tyre wear with energy efficiency of a vehicle when controlling motion of the vehicle.

According to a fifth aspect of the disclosure, there is provided a non-transitory computer-readable storage medium comprising instructions, which when executed by processing circuitry, cause the processing circuitry to perform the computer-implemented method of the third aspect. The fifth aspect of the disclosure may seek to enable new vehicles and/or legacy vehicles to be conveniently configured, by software installation/update, to balance tyre wear with energy efficiency of a vehicle when controlling motion of the vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

**FIG. 1** schematically shows a side view of a vehicle according to an example.
**FIG. 2** is a flow chart of a computer-implemented method according to an example.
**FIG. 3** is a schematic diagram of a computer system for implementing examples disclosed herein.

Like reference numerals refer to like elements throughout the description.

## DETAILED DESCRIPTION

The detailed description set forth below provides information and examples of the disclosed technology with sufficient detail to enable those skilled in the art to practice the disclosure.

Many vehicles today are run with control requests that seek to meet a certain goal without taking tyre wear into account. For example, predictive energy management, i.e., controlling vehicle motion by optimal torque (or power) distribution between different power sources and brakes considering upcoming road and traffic, is often intended to minimise energy consumption over an upcoming road horizon. This can include actions such as regenerative braking intended to increase energy efficiency. However, certain strategies for increasing energy efficiency, such as regenerative braking, involve an increase in the axial torque on the wheels of the vehicle, leading to an increase in tyre wear. In this scenario, the benefits of energy efficiency will at some point be outweighed by the downsides of tyre wear. Another example is when there is more than one driven axle in the vehicle. A traditional control allocator may allocate torque based on an optimal operating point of a single driven axle. However, such a decision may increase tyre wear compared to the case when other driven axles are utilized.

To remedy this, systems and methods are proposed for determining control inputs for a vehicle that balance energy efficiency with tyre wear concerns. In particular, operational information relating to a manoeuvre of the vehicle, such as a current road inclination, an estimated vehicle mass, and/or a requested acceleration, is acquired. A cost associated with energy efficiency of one or more motion support devices of the vehicle performing the manoeuvre is determined. A cost associated with tyre wear of the vehicle performing the manoeuvre is also determined. A control input is determined based on these costs such that a cumulative cost of energy efficiency and tyre wear is below a threshold, for example minimised. In this way, it can be ensured that costs associated with energy efficiency and tyre wear are balanced appropriately when controlling motion of the vehicle.

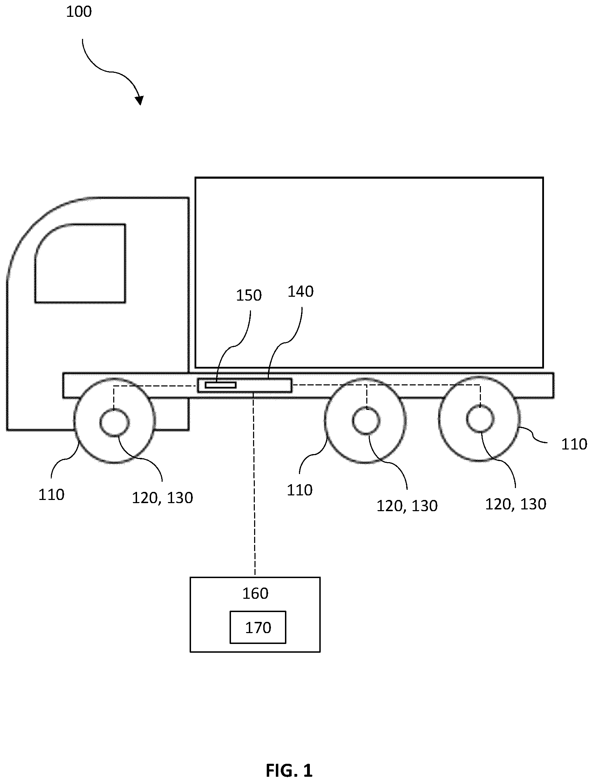

**FIG. 1** schematically shows a side view of an example vehicle **100** of the type considered in this disclosure. The vehicle **100** may be any suitable form of vehicle. For example, the disclosure can be applied in heavy-duty vehicles, such as trucks, buses, construction equipment, and multi-unit vehicle combinations, in personal vehicles such as cars, vans, or motorbikes, or in any other suitable form of vehicle. The vehicle **100** comprises a number of axles, each generally having two or more wheels **110**. Whilst three axles are shown, it will be appreciated that any suitable number of axles may be provided. It will also be appreciated that any number of the axles may be driven axles.

The vehicle **100** may comprise one or more sources or propulsion. For example, the vehicle **100** may comprise one or more electrical machines **120** such as electric motors and/or generators. The vehicle **100** may comprise one or more batteries (not shown) configured to provide power to the electrical machines **120.** In some examples, the vehicle **100** may also include another source of propulsion, for example an internal combustion engine (ICE). The vehicle **100** also comprises a drivetrain (not shown) to deliver mechanical power from the propulsion source (the electrical machines **120** or the ICE) to the wheels **110**.

The electrical machines **120** are configured to drive, e.g. provide torque and/or steering to, one or more axles or individual wheels **110** of the vehicle **100**. The electrical machines **120** can supply either a positive (propulsion) or negative (braking) force. The use of electrical machines **120** to supply a negative force is known as regenerative braking, in which case the electrical machines **120** may be operated as generators, in order to recover energy during braking.

Furthermore, the vehicle **100** may comprise one or more sets of service brakes **130**. The service brakes **130** can supply a negative (braking) force. The service brakes **130** may be, for example, frictional brakes such as pneumatic brakes. Pneumatic brakes use a compressor to fill the brake with air, which may be powered by the batteries. In some examples, the brakes may be electro-mechanical brakes. The energy recovered from regenerative braking by the electrical machines **120** can be stored in the batteries, and so regenerative braking may generally be preferred over using service brakes. The electrical machines **120,** service brakes **130,** and ICE of a vehicle **100** may be referred to as motion support devices (MSDs) of the vehicle **100.**

In some examples, the vehicle **100** may be a vehicle combination comprising a number of units, including a tractor unit and at least one trailing unit. A tractor unit is generally the foremost unit in a vehicle combination, and may comprise the cabin for the driver, including steering controls, dashboard displays and the like. Generally, the tractor unit is used to provide propulsion power for the vehicle combination **100.** A trailing unit is generally used to store goods that are being transported by the vehicle combination **100.** A trailing unit may be a truck, trailer, dolly and the like. A trailing unit may also provide propulsion to the vehicle combination **100.** In such examples, each unit may comprise its own electrical machines **120,** batteries, service brakes **130,** and the like. In this way, all units may provide propulsion to the vehicle combination **100.**

When the vehicle **100** is in motion, the wheels (or indeed tyres) **110** of the vehicle **100** experience slip. Slip can be expressed as the body slip on the vehicle **100** as a whole, or the slip on a given wheel **110,** which can be divided into longitudinal and lateral slip. These parameters are known in the art, and not discussed in detail here. However, it is noted that the longitudinal slip $s_{xik}$ and lateral slip $s_{yik}$ on a wheel **110** may be given by:

$$s_{xik} = \frac{R_{ik}\omega_{ik} - v_{wxik}}{|R_{ik}\omega_{ik}|} \tag{1}$$

$$s_{yik} = \frac{v_{wyik}}{|R_{ik}\omega_{ik}|} \tag{2}$$

where $R$ is the tyre radius, $\omega$ is the wheel rotational speed, $v_{wxik}$ and $v_{wyik}$ are the wheel hub velocity components in the wheel local coordinate system, $k$ is the wheel index, and $i$ is the unit index in the case of a multi-unit vehicle combination.

Returning to **FIG. 1,** the vehicle **100** includes a controller **140** comprising processing circuitry **150.** The controller **140** is configured to control components of the vehicle, for example the electrical machines **120. FIG. 1** shows a common controller **140** for all electrical machines **120** of the vehicle **100,** however it will be appreciated that each electrical machine **120** may have its own respective controller **140.** In many cases, the controller **140** may be implemented in the structure of the electrical machine **120** itself. The controller **140** may be a microcontroller. In examples where the vehicle **100** is a vehicle combination, the vehicle **100** may include a global controller and a plurality of unit controllers, for example a controller for each unit. Vehicle motion management may therefore be available on a unit level to receive requests from a manual or virtual driver to coordinate the propulsion, braking and steering.

The controller **140** may receive control signals from a computer system **160** comprising processing circuitry **170.** The computer system **160** may be a vehicle control unit configured to perform various vehicle (unit) control functions, such as vehicle motion management. The computer system **160** may be local to the vehicle **100,** or may be a remote system, implemented at a distance from the vehicle **100.** The computer system **160** may be communicatively coupled to the controller **140** in any suitable way, for example via a circuit or any other wired, wireless, or network connection known in the art. Furthermore, the communicative coupling may be implemented as a direct connection between the controller **140** and the computer system **160,** or may be implemented as a connection via one or more intermediate entities.

One function of the controller **140** and the computer system **160** is to provide control inputs for the vehicle **100,** for example torque, force, or slip requests. These control inputs should enable a requested manoeuvre for the vehicle **100,** for example, straight-line driving, cornering, braking and the like, whilst ensuring safe and efficient motion of the vehicle **100.** In many cases, these control inputs are determined to meet a certain goal, for example energy efficiency, safety, range, etc. However, tyre wear is not always taken into account.

When a vehicle is in operation, the interaction between the tyres and the surface on which the vehicle is driven causes the tyres to break down into small particles. This is particularly the case in acceleration, braking, and turning manoeuvres. This has several negative impacts. One impact is that the broken down particles are emitted into the environment, polluting air, water, and soil. A typical tyre is made of a blend of natural rubber, synthetic rubber, plastic polymers, metals, and other chemical compounds. Particulate emissions of these materials can be harmful to the environment. Another impact is that, as tyre wear increases, the friction provided by the tyre is reduced. This is because the tread depth of the tyre is reduced as the tyre is worn down. Tread depth directly affects a tyre's ability to grip the road surface, channel water away in wet conditions, and maintain overall traction and stability. As such, a tyre is not able to perform to its full capacity as tyre wear increases. Another impact is that, when a tyre becomes worn beyond its useful performance, it must be maintained and/or replaced. This causes a further increase in the environmental impact of tyre wear, as more tyres must be produced and transported and the vehicle must travel to a maintenance location.

These negative impacts are not often taken into account when determining control inputs for a vehicle **100.** For example, when determining a control input for a battery electric vehicle (BEV), regenerative braking may be prioritised as the energy recovered from regenerative braking can be stored in the batteries, thus increasing energy efficiency. This can be achieved, for example, using brake-blending strategies of BEVs, where the entire brake request may be met by driven axles to maximize the regenerative capability. Such a brake-blending strategy can be necessary to increase range and reduced energy consumption of BEVs. However, regenerative braking involves an increase in the axial torque on the wheels **110** of the vehicle **100,** leading to an increase in tyre wear. In this scenario, the benefits of regenerative braking will at some point be outweighed by the downsides of tyre wear.

To remedy this, systems and methods are proposed for determining control inputs for a vehicle that balance energy efficiency with tyre wear concerns. In particular, costs associated with energy efficiency and tyre wear of a vehicle performing a manoeuvre are determined. A control input is determined based on these costs such that a cumulative cost of energy efficiency and tyre wear is below a threshold, for example minimised. In this way, it can be ensured that costs associated with energy efficiency and tyre wear are balanced appropriately when controlling motion of the vehicle.

To this end, a cost associated with energy efficiency of one or more MSDs of the vehicle **100** can be determined. This cost may be formulated to represent $CO_2$ emissions, electrical energy usage, and/or fuel consumption of the one or more MSDs. A cost associated with tyre wear of the vehicle **100** can also be determined. This cost may be formulated to represent particulate emissions and/or friction loss (e.g. a tyre tread depth reduction) from a tyre as a function of a longitudinal slip associated with the one or more wheels **110**. The costs may be formulated in any suitable manner, for example based on modelling, historical data or experiments.

In some examples, the cost associated with energy efficiency of one or more MSDs can be determined based on $CO_2$ emissions. In some examples, this can be expressed as a function of the fuel equivalent force based on a value that converts fuel energy to $CO_2$. This value may be constant that expresses a cost in terms of the $CO_2$ content of the fuel per unit energy content of the fuel. For example, for a value of $CO_2$ content of the fuel per litre of 2.68 kg/l, and a value of energy content of the fuel energy content of the fuel of 3 8.6e6 MJ/l, a value of the constant will be $6.9 \times 10^{-8}$ kg/J. It will be appreciated that a cost associated with $CO_2$ emissions can be determined in any suitable manner.

In some examples, the cost associated with energy efficiency of one or more MSDs can be determined based on electrical energy usage. In some examples, this can be expressed as a function of the friction service brake force $F_{br}$ and/or the dissipation force of the electric driveline based on a value that expresses a cost per unit of electrical energy. It will be appreciated that a cost associated with electrical energy usage can be determined in any suitable manner.

In some examples, the cost associated with tyre wear can be determined based on modelling particulate emissions and/or tyre tread depth reduction. It is noted that a number of different factors may influence tyre wear, such as axle load, temperature, tyre pressure, lateral slip, longitudinal slip, longitudinal slip rate, sliding distance, tyre material, tyre tread shape, tyre size, road type, and vehicle velocity speed. However, many of these factors are not controllable during driving of the vehicle. Therefore, for the purposes of the present disclosure, a longitudinal slip associated with the one or more wheels **110** of the vehicle **100** is considered.

Particulate emissions $E_{wear}$ from a tyre, expressed in kilograms, may be determined as follows:

$$E_{wear} = \frac{W_{tyre} K_{wear} d_s s_{xik}^2}{1000} \qquad (3)$$

where $W_{tyre}$ is the tyre width, $K_{wear}$ is a fitting factor, and $d_s$ is a distance increment (e.g. road distance step size of the recorded data). The longitudinal slip $s_{xik}$ can be determined in any suitable manner, for example using equation (1), in the manner described in PCT patent application no. WO 2022/106004 in the name of Volvo Truck Corporation, based on a nonlinear tyre model, or linearly according to "An Empirical Tire-Wear Model for Heavy-Goods Vehicles", June 2021, Tire Science and Technology 50(3).

Alternatively, particulate emissions $E_{wear}$ for an axle, expressed in kilograms, may be determined based on a linear tyre model as follows:

$$E_{wear,axle} = n_{tyres} \frac{W_{tyre} K_{wear} ds \left(\frac{F_{x,tyre}}{c_{s,tyre}}\right)^2}{1000} \qquad (4)$$

where $F_{x,tyre}$ is the longitudinal force on the tyre, $n_{tyres}$ is the number of tyres on the axle, and $c_{s,tyre}$ is a characteristic given by:

$$c_{s,tyre} = 10 F_{z,tyre} \qquad (5)$$

where $F_{z,tyre}$ is the vertical force on the tyre.

A corresponding tyre tread depth reduction $d_h$ may be determined as follows:

$$d_h = \frac{E_{wear}}{2RW_{tyre}\pi D_{tyre}} \qquad (6)$$

where $D_{tyre}$ is the tyre material density.

Based on these values, a cost associated with tyre wear can be formulated accordingly. For example, a cost of tyre wear can be formulated based on the tyre tread depth reduction $d_h$ and the tyre tread depth at the beginning of tyre life. A cost rate of tyre wear $C_{tireWearAxle,l}$ of axle $l$ can be formulated based on the cost of tyre wear and the distance travelled. Moreover, the term of the tyre wear cost can be a convex function of tyre torque, longitudinal force, or longitudinal slip. Therefore, it does not necessarily cause additional computational load on existing predictive energy management strategies.

When determining the technical costs discussed herein, they may be normalised such that they can be compared in a relevant manner. This may be achieved in any suitable manner. In one example, the technical costs may be normalised based on a unit of currency to express them financially. For example, weighting factors in the costs may be set such that the energy efficiency and tyre wear have the same unit, which is cost-rate (of time or of distance, Euro/s or Euro/m). In this case, the tyre wear cost is a function of the vehicle type, axle loads, tyre type and size, price of tyre, services, and maintenance, as well as physics-based validated models to relate vehicle usage to the specific axle tyre wear via tyre longitudinal slip.

It will be appreciated that the costs discussed above are examples only, and an appropriate cost to describe the effects of longitudinal slip may be formulated by an operator in any suitable manner.

An optimisation function can then be defined to determine one or more of a wheel force $F_{mwk}$ provided by the $k^{th}$ electrical machine **120,** a friction force $F_{br}$ provided by the service brakes, and a total gear ratio $r_{m,k}$ of the gearbox and differential related to the $k^{th}$ electrical machine 120. The optimisation problem may be an optimal control problem (OCP), for example a non-linear optimal control problem (NOCP), although it is possible to formulate a linear OCP that provides a solution of sufficient accuracy. An NOCP can be defined, e.g., as follows:

find $F_{mwk}$, $F_{br}$, $r_{m,k}$, $k = 1 \dots n_{em}$ to minimise:

$$J = \left(F_{br} + \Sigma_{k=1}^{k=n_{em}} F_{mc,k}\right)C_{el} + \Sigma_{l=1}^{l=2n_{dAxles}} C_{tireWearAxle,l} \qquad (7)$$

subject to:

Vehicle longitudinal dynamics in space domain (road grade $\alpha(s)$ positive downhill) including the effect of road curvature:

$$acc = \frac{1}{m}\left(-F_{br} + \Sigma_{k=1}^{k=n_{em}} F_{mw,k} + mg\sin\alpha - mgf_r\cos\alpha - 0.5\rho_a A_f c_d v_x^2\right) \qquad (8)$$

Electrical machine ($k = 1 \dots n_{em}$) consumption using two $5^{th}$ degree fitting functions for positive and negative torques:

$$F_{mck} = \frac{1}{v_x}\sum_{i=0}^{5}\sum_{j=0}^{5} h_{ijk}^+ \left(\frac{r_{m,k}}{R_w}v_x\right)^i \left(\frac{R_w F_{mw,k}}{r_{m,k}\eta_{tm,k}}\right)^j, \; F_{mw,k} > 0, \qquad (9)$$

$$F_{mck} = \frac{1}{v_x}\sum_{i=0}^{5}\sum_{j=0}^{5} h_{ijk}^- \left(\frac{r_{m,k}}{R_w}v_x\right)^i \left(\frac{R_w F_{mw,k}\eta_{tm,k}}{r_{m,k}}\right)^j, \; F_{mw,k} \leq 0 \qquad (10)$$

Electrical machine torque upper and lower limits ($k = 1 \dots n_{em}$):

$$\frac{R_w F_{mw,k}}{r_{m,k}\eta_{tm,k}} - \min\left\{\sum_{j=0}^{3}\left(\frac{r_{m,k}}{R_w}v_x\right)^j b_{ij,k}^m, i = 1,2\right\} \leq 0 \qquad (11)$$

$$-\frac{R_w\,F_{mw,k}\eta_{tm,k}}{r_{m,k}} + \max\left\{\sum_{j=0}^{3}\left(\frac{r_{mk}}{R_w}v_x\right)^j b_{ij,k}^m, i = 3,4\right\} \le 0 \qquad (12)$$

Friction brake lower limit:

$$-F_{br} \le 0 \qquad\qquad (13)$$

The notations in the table below can apply to the above equations:

| | | | |
|---|---|---|---|
| $A_t$ | Front area of the vehicle | $J$ | Nonlinear cost function |
| $b_{ij}^e$ | Fitting curve coefficients of the maximum ICE torque | $m$ | Gross combination mass |
| $b_{ij}^m$ | Fitting curve coefficients of the maximum and minimum EM torques | $n_{dAxles}$ | Number of driven axles |
| $c_d$ | Drag coefficient | $p_{bmin}$ | Batteries minimum power |
| $F_{br}$ | Friction service brake force | $r_{m,k}$ | Total gear ratio of the gearbox and differential related to $k^{th}$ EM |
| $F_{mc,k}$ | Input equivalent force to $k^{th}$ EM ($v_x\,F_{mc}$ yields the power consumed by EM) | $R_w$ | Wheel effective radius |
| $F_{mw,k}$ | Wheel force coming from $k^{th}$ EM | $v_x$ | Longitudinal velocity of the vehicle |
| $f_r$ | Rolling resistance coefficient | $\alpha$ | Road grade positive downhill |
| $g$ | Gravitational acceleration | $\eta_{tm,k}$ | Efficiency of $k^{th}$ EM transmission |
| $h_{ij}^+$ | Fitting function coefficients of the positive EM power consumption | $\mu$ | Road friction coefficient |
| | | $\rho_a$ | Air density |

Equation (7) is the cost function, where *acc* is the acceleration request. It will be appreciated that the constraints can be formulated in different ways mathematically with similar technical effects. It is furthermore appreciated that the type of NOCP described above can then be solved by computer-based solution methods known in the art, for example by sequential programming or convex approximation.

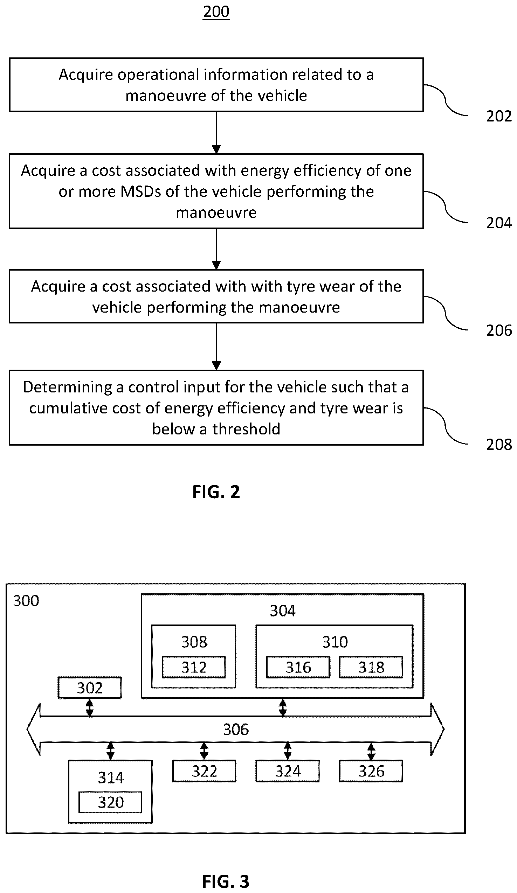

**FIG. 2** is a flow chart of a computer-implemented method **200** according to an example. The method **200** is for determining a control input for a vehicle, such as the vehicle **100**. The method **200** enables costs associated with tyre wear and energy efficiency to be balanced appropriately. The method **200** may be implemented by processing circuitry of a computer system (e.g., the processing circuitry **150** of the controller **140,** or the processing circuitry **170** of the computer system **160** described in relation to **FIG. 1).**

At **202,** operational information related to a manoeuvre of the vehicle is acquired. A manoeuvre may include, for example, straight-line driving, cornering, braking and the like. The operational information may include information such as a road inclination, an estimated vehicle mass, an estimated vehicle velocity, and/or a requested acceleration. These may be inputs to the controller **140,** for example as shown above in equation (8).

At **204,** a cost associated with energy efficiency of one or more MSDs of the vehicle **100** is acquired. The cost is that for the vehicle **100** to perform the manoeuvre for which operational information is acquired at **202.** As discussed above, the one or more MSDs may comprise electrical machines **120,** service brakes **130,** and/or an ICE of the vehicle **100.** The cost may represent $CO_2$ emissions, electrical energy usage, and/or fuel consumption of the one or more MSDs. The cost may be formulated in any suitable manner, for example based on modelling, historical data or experiments.

At **206,** a cost associated with tyre wear of the vehicle **100** is acquired. The cost is that for the vehicle **100** to perform the manoeuvre for which operational information is acquired at **202.** As discussed above, the cost associated with tyre wear of the vehicle may represent particulate emissions and/or friction loss from a tyre as a function of a longitudinal slip associated with the one or more wheels **110.** The cost may be formulated in any suitable manner, for example based on modelling, historical data or experiments.

It is noted that, while a number of different factors may influence tyre wear (such as axle load, temperature, tyre pressure, lateral slip, longitudinal slip rate, sliding distance, tyre material, tyre tread shape, tyre size, road type, and vehicle velocity speed), longitudinal slip associated with one or more wheels **110** of the vehicle **100** is considered for the purposes of the method **200,** as it is controllable during driving of the vehicle **100.** By determining a cost associated with tyre wear of the vehicle **100** as a function of longitudinal slip, real-time control of the vehicle **100** can be implemented based on current vehicle states.

When determining the technical costs discussed in **204** and **206,** it may be desirable that they are normalised such that they can be compared in a relevant manner. This may be achieved in any suitable manner. In one example, the technical costs may be normalised based on a unit of currency to express them financially.

At **208,** a control input for the vehicle **100** is determined such that a cumulative cost of energy efficiency and tyre wear is below a threshold. The threshold may be set in any suitable manner. In particular, the control input may be determined using an optimisation function to minimise the cumulative cost. The optimisation problem may be an OCP. The OCP may be an NOCP, although it is also possible to formulate a linear OCP that provides a solution of sufficient accuracy. The solution is found to the optimisation problem such that the total cost for performing the manoeuvre, including the cost associated with energy efficiency of one or more MSDs of the vehicle **100** and the cost associated with tyre wear of the vehicle **100,** is below a threshold, for example minimised.

The determined control input may comprise a force input, a torque input, and/or a longitudinal slip input for one or more motion support devices of the vehicle. For example, the force input may comprise a force from an electric machine **120,** a force from a set of service brakes **130,** and/or a total gear ratio associated with an electric machine **120** (including an on/off setting for the an electric machine **120)** In this way, the vehicle can be controlled to behave such that the cost threshold is not met. For example, the control system may then vehicle motion management such as brake-blending using the determined control input.

The determined control input may comprise a respective control input for one or more axles of the vehicle **100.** In particular, a control input may be determined for one or more driven axles of the vehicle **100.** Tyre wear caused by axial torque and/or longitudinal slip is especially higher on driven axles of a vehicle compared to other axles. The reason is that the driven axle tyres are under more stress during acceleration and deceleration or retardation compared to other axles. For the same reason, and also for the fact that the response time of electric-driveline is faster than that of diesel vehicles, the driven axles of battery electric vehicles (BEVs) experience higher tyre wear.

The method **200** serves to balance tyre wear with energy efficiency when performing a manoeuvre. By determining a control input for a vehicle based on maintaining a cumulative cost of tyre wear and energy efficiency when performing a manoeuvre below a threshold, it can be ensured that operation of the vehicle does not exceed the threshold cost. This means that vehicle performance can be optimised in a certain way without overly compromising tyre performance and causing negative effects such as reduction of friction and increase of particulate emissions from the tyres. In some implementations, a vehicle operator may be able to deactivate this function to disregard tyre wear cost, for example in range critical driving cycles.

It is important to note that energy efficiency does not necessarily mean cost efficiency. There can be situations in which an energy efficient power distribution increases the with tyre wear cost. In that case, inclusion of with wear in the cost function can help to reduce the total cost of operations. However, in some examples, reducing the cost may reduce the range. Therefore, in some examples, the range may be taken into account when determining operation parameters for a manoeuvre.

FIG. 3 is a schematic diagram of a computer system **300** for implementing examples disclosed herein. The computer system **300** is adapted to execute instructions from a computer-readable medium to perform these and/or any of the functions or processing described herein. The computer system **300** may be connected (e.g., networked) to other machines in a LAN, an intranet, an extranet, or the Internet. While only a single device is illustrated, the computer system **300** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **300** may comprise at least one computing device or electronic device capable of including firmware, hardware, and/or executing software instructions to implement the functionality described herein. The computer system **300** may include processing circuitry **302** (e.g., processing circuitry including one or more processor devices or control units), a memory **304,** and a system bus **306.** The computer system **300** may include at least one computing device having the processing circuitry **302.** The system bus **306** provides an interface for system components including, but not limited to, the memory **304** and the processing circuitry **302.** The processing circuitry **302** may include any number of hardware components for conducting data or signal processing or for executing computer code stored in memory **304.** The processing circuitry **302** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **302** may further include computer executable code that controls operation of the programmable device.

The system bus **306** may be any of several types of bus structures that may further interconnect to a memory bus (with or without a memory controller), a peripheral bus, and/or a local bus using any of a variety of bus architectures. The memory **304** may be one or more devices for storing data and/or computer code for completing or facilitating methods described herein. The memory **304** may include database components, object code components, script components, or other types of information structure for supporting the various activities herein. Any distributed or local memory device may be utilized with the systems and methods of this description. The memory **304** may be communicably connected to the processing circuitry **302** (e.g., via a circuit or any other wired, wireless, or network connection) and may include computer code for executing one or more processes described herein. The memory **304** may include non-volatile memory **308** (e.g., read-only memory (ROM), erasable programmable read-only memory (EPROM), electrically erasable programmable read-only memory (EEPROM), etc.), and volatile memory **310** (e.g., random-access memory (RAM)), or any other medium which can be used to carry or store desired program code in the form of machine-executable instructions or data structures and which can be accessed by a computer or other machine with processing circuitry **302.** A basic input/output system (BIOS) **312** may be stored in the non-volatile memory **308** and can include the basic routines that help to transfer information between elements within the computer system **300.**

The computer system **300** may further include or be coupled to a non-transitory computer-readable storage medium such as the storage device **314,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **314** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **314** and/or in the volatile memory **310,** which may include an operating system **316** and/or one or more program modules **318.** All or a portion of the examples disclosed herein may be implemented as a computer program **320** stored on a transitory or non-transitory computer-usable or computer-readable storage medium (e.g., single medium or multiple media), such as the storage device **314,** which includes complex programming instructions (e.g., complex computer-readable program code) to cause the processing circuitry **302** to carry out actions described herein. Thus, the computer-readable program code of the computer program **320** can comprise software instructions for implementing the functionality of the examples described herein when executed by the processing circuitry **302.** In some examples, the storage device **314** may be a computer program product (e.g., readable storage medium) storing the computer program **320** thereon, where at least a portion of a computer program **320** may be loadable (e.g., into a processor) for implementing the functionality of the examples described herein when executed by the processing circuitry **302.** The processing circuitry **302** may serve as a controller or control system for the computer system **300** that is to implement the functionality described herein.

The computer system **300** may include an input device interface **322** configured to receive input and selections to be communicated to the computer system **300** when executing instructions, such as from a keyboard, mouse, touch-sensitive surface, etc. Such input devices may be connected to the processing circuitry **302** through the input device interface **322** coupled to the system bus **306** but can be connected through other interfaces, such as a parallel port, an Institute of Electrical and Electronic Engineers (IEEE) 1394 serial port, a Universal Serial Bus (USB) port, an IR interface, and the like. The computer system **300** may include an output device interface **324** configured to forward output, such as to a display, a video display unit (e.g., a liquid crystal display (LCD) or a cathode ray tube (CRT)). The computer system **300** may include a communications interface **326** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:

Example 1: A computer system (140, 160, 300) for determining a control input for a vehicle (100), the computer system (140, 160, 300) comprising processing circuitry (150, 170, 302) configured to: acquire operational information relating to a manoeuvre of the vehicle (100); and determine a cost associated with energy efficiency of one or more motion support devices (120, 130) of the vehicle (100) performing the manoeuvre; determine a cost associated with tyre wear of the vehicle (100) performing the manoeuvre; and determine a control input such that a cumulative cost of energy efficiency and tyre wear is below a threshold.

Example 2: The computer system (140, 160, 300) of example 1, wherein the operational information comprises a road inclination, an estimated vehicle mass, an estimated vehicle velocity, and/or a requested acceleration.

Example 3: The computer system (140, 160, 300) of example 1 or 2, wherein the cost associated with energy efficiency of one or more motion support devices (120, 130) of the vehicle (100) represents one or more of $CO_2$ emissions, electrical energy usage, and fuel consumption.

Example 4: The computer system (140, 160, 300) of any preceding example, wherein the motion support devices (120, 130) comprise one or more electric machines (120), internal combustion engines, and/or service brakes (130).

Example 5: The computer system (140, 160, 300) of any preceding example, wherein the cost associated with tyre wear of the vehicle represents particulate emissions and/or friction loss from a tyre as a function of a longitudinal slip associated with the one or more wheels (110).

Example 6: The computer system (140, 160, 300) of any preceding example, wherein the cost associated with tyre wear of the vehicle is based on one or more of axle loads, tyre type, and tyre size.

Example 7: The computer system (140, 160, 300) of any preceding example, wherein the processing circuitry (150, 170, 302) is configured to determine the control input using an optimisation function to minimise the cumulative cost.

Example 8: The computer system (140, 160, 300) of any preceding example, wherein the determined control input comprises a force input, a torque input, and/or a longitudinal slip input for one or more motion support devices (120, 130) of the vehicle.

Example 9: The computer system (140, 160, 300) of example 8, wherein the force input comprises a force from an electric machine (120), a force from a set of service brakes (130), and/or a total gear ratio associated with an electric machine (120).

Example 10: The computer system (140, 160, 300) of any preceding example, wherein the determined control input comprises a respective control input for one or more axles of the vehicle (100).

Example 11: The computer system (140, 160, 300) of any preceding example, wherein the determined control input relates to one or more driven axles of the vehicle (100).

Example 12: A vehicle (100) comprising the computer system (140, 160, 300) of any preceding example.

Example 13: A computer-implemented method (200) for determining a control input for a vehicle (100), the method (200) comprising: acquiring (202), by processing circuitry (150, 170, 302) of a computer system (140, 160, 300), operational information relating to a manoeuvre of the vehicle (100); determining (204), by the processing circuitry (150, 170, 302), a cost associated with energy efficiency of one or more motion support devices (120, 130) of the vehicle (100) performing the manoeuvre; determining (206), by the processing circuitry (150, 170, 302), a cost associated with tyre wear of the vehicle (100) performing the manoeuvre; and determining (208), by the processing circuitry (150, 170, 302), a control input such that a cumulative cost of energy efficiency and tyre wear is below a threshold.

Example 14: The computer-implemented method (200) of example 13, wherein the operational information comprises a road inclination, an estimated vehicle mass, an estimated vehicle velocity, and/or a requested acceleration.

Example 15: The computer-implemented method (200) of example 13 or 14, wherein the cost associated with energy efficiency of one or more motion support devices (120, 130) of the vehicle (100) represents one or more of $CO_2$ emissions, electrical energy usage, and fuel consumption.

Example 16: The computer-implemented method (200) of any of examples 13 to 15, wherein the motion support devices (120, 130) comprise one or more electric machines (120), internal combustion engines, and/or service brakes (130).

Example 17: The computer-implemented method (200) of any of examples 13 to 16, wherein the cost associated with tyre wear of the vehicle represents particulate emissions and/or friction loss from a tyre as a function of a longitudinal slip associated with the one or more wheels (110).

Example 18: The computer-implemented method (200) of any of examples 13 to 17, wherein the cost associated with tyre wear of the vehicle is based on one or more of axle loads, tyre type, and tyre size.

Example 19: The computer-implemented method (200) of any of examples 13 to 18, comprising determining the control input using an optimisation function to minimise the cumulative cost.

Example 20: The computer-implemented method (200) of any of examples 13 to 19, wherein the determined control input comprises a force input, a torque input, and/or a longitudinal slip input for one or more motion support devices (120, 130) of the vehicle.

Example 21: The computer-implemented method (200) of example 20, wherein the force input comprises a force from an electric machine (120), a force from a set of service brakes (130), and/or a total gear ratio associated with an electric machine (120).

Example 22: The computer-implemented method (200) of any of examples 13 to 21, wherein the determined control input comprises a respective control input for one or more axles of the vehicle (100).

Example 23: The computer-implemented method (200) of any of examples 13 to 22, wherein the determined control input relates to one or more driven axles of the vehicle (100).

Example 24: The A computer program product comprising program code for performing, when executed by processing circuitry (150, 170, 302), the computer-implemented method (200) of any of examples 13 to 23.

Example 25: The A non-transitory computer-readable storage medium comprising instructions, which when executed by processing circuitry (150, 170, 302), cause the processing circuitry to perform the computer-implemented method (200) of any of examples 13 to 23.

Terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system (140, 160, 300) for determining a control input for a vehicle (100), the computer system (140, 160, 300) comprising processing circuitry (150, 170, 302) configured to:

   acquire operational information relating to a manoeuvre of the vehicle (100); and
   determine a cost associated with energy efficiency of one or more motion support devices (120, 130) of the vehicle (100) performing the manoeuvre;
   determine a cost associated with tyre wear of the vehicle (100) performing the manoeuvre; and
   determine a control input such that a cumulative cost of energy efficiency and tyre wear is below a threshold.

2. The computer system (140, 160, 300) of claim 1, wherein the operational information comprises a road inclination, an estimated vehicle mass, an estimated vehicle velocity, and/or a requested acceleration.

3. The computer system (140, 160, 300) of claim 1 or 2, wherein the cost associated with energy efficiency of one or more motion support devices (120, 130) of the vehicle (100) represents one or more of $CO_2$ emissions, electrical energy usage, and fuel consumption.

4. The computer system (140, 160, 300) of any preceding claim, wherein the motion support devices (120, 130) comprise one or more electric machines (120), internal combustion engines, and/or service brakes (130).

5. The computer system (140, 160, 300) of any preceding claim, wherein the cost associated with tyre wear of the vehicle represents particulate emissions and/or friction loss from a tyre as a function of a longitudinal slip associated with the one or more wheels (110).

6. The computer system (140, 160, 300) of any preceding claim, wherein the cost associated with tyre wear of the vehicle is based on one or more of axle loads, tyre type, and tyre size.

7. The computer system (140, 160, 300) of any preceding claim, wherein the processing circuitry (150, 170, 302) is configured to determine the control input using an optimisation function to minimise the cumulative cost.

8. The computer system (140, 160, 300) of any preceding claim, wherein the determined control input comprises a force input, a torque input, and/or a longitudinal slip input for one or more motion support devices (120, 130) of the vehicle.

9. The computer system (140, 160, 300) of claim 8, wherein the force input comprises a force from an electric machine (120), a force from a set of service brakes (130), and/or a total gear ratio associated with an electric machine (120).

10. The computer system (140, 160, 300) of any preceding claim, wherein the determined control input comprises a respective control input for one or more axles of the vehicle (100).

11. The computer system (140, 160, 300) of any preceding claim, wherein the determined control input relates to one or more driven axles of the vehicle (100).

12. A vehicle (100) comprising the computer system (140, 160, 300) of any preceding claim.

13. A computer-implemented method (200) for determining a control input for a vehicle (100), the method (200) comprising:

acquiring (202), by processing circuitry (150, 170, 302) of a computer system (140, 160, 300), operational information relating to a manoeuvre of the vehicle (100);
determining (204), by the processing circuitry (150, 170, 302), a cost associated with energy efficiency of one or more motion support devices (120, 130) of the vehicle (100) performing the manoeuvre;
determining (206), by the processing circuitry (150, 170, 302), a cost associated with tyre wear of the vehicle (100) performing the manoeuvre; and
determining (208), by the processing circuitry (150, 170, 302), a control input such that a cumulative cost of energy efficiency and tyre wear is below a threshold.

14. A computer program product comprising program code for performing, when executed by processing circuitry (150, 170, 302), the computer-implemented method (200) of claim 13.

15. A non-transitory computer-readable storage medium comprising instructions, which when executed by processing circuitry (150, 170, 302), cause the processing circuitry to perform the computer-implemented method (200) of claim 13.

100

150  140

110

120, 130

110

110

120, 130

120, 130

110

160

170

**FIG. 1**

<u>200</u>

```
┌─────────────────────────────────────────────┐
│  Acquire operational information related to a │
│        manoeuvre of the vehicle               │      202
└─────────────────────────────────────────────┘
                      │
                      ▼
┌─────────────────────────────────────────────┐
│ Acquire a cost associated with energy         │
│ efficiency of one or more MSDs of the vehicle │      204
│        performing the manoeuvre               │
└─────────────────────────────────────────────┘
                      │
                      ▼
┌─────────────────────────────────────────────┐
│ Acquire a cost associated with with tyre wear │
│   of the vehicle performing the manoeuvre     │      206
└─────────────────────────────────────────────┘
                      │
                      ▼
┌─────────────────────────────────────────────┐
│ Determining a control input for the vehicle   │
│ such that a cumulative cost of energy          │     208
│ efficiency and tyre wear is below a threshold  │
└─────────────────────────────────────────────┘
```

**FIG. 2**

**FIG. 3**

EP 4 613 596 A1

Europäisches Patentamt
European Patent Office
Office européen des brevets

# EUROPEAN SEARCH REPORT

**Application Number**

EP 24 17 7973

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 441 595 A2 (MAN TRUCK & BUS AG [DE]) 18 April 2012 (2012-04-18) * paragraph [0001] - paragraph [0040]; figures 1-5 * | 1-15 | INV. B60W50/00 B60C11/24 |
| A | US 2023/150482 A1 (PROKES JAKUB [SE] ET AL) 18 May 2023 (2023-05-18) * paragraph [0008] - paragraph [0246]; figures 1-9 * | 1-15 | |

TECHNICAL FIELDS SEARCHED (IPC)

B60W
B60C

The present search report has been drawn up for all claims

| Place of search | Date of completion of the search | Examiner |
|---|---|---|
| Munich | 11 October 2024 | Jung, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

**ANNEX TO THE EUROPEAN SEARCH REPORT
ON EUROPEAN PATENT APPLICATION NO.**

EP 24 17 7973

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2024

| Patent document cited in search report | | Publication date | Patent family member(s) | | Publication date |
|---|---|---|---|---|---|
| EP 2441595 | A2 | 18-04-2012 | BR | PI1106945 A2 | 05-03-2013 |
| | | | CN | 102442316 A | 09-05-2012 |
| | | | DE | 102010048322 A1 | 19-04-2012 |
| | | | EP | 2441595 A2 | 18-04-2012 |
| | | | RU | 2011141463 A | 20-04-2013 |
| US 2023150482 | A1 | 18-05-2023 | CN | 116135558 A | 19-05-2023 |
| | | | EP | 4183601 A1 | 24-05-2023 |
| | | | EP | 4183602 A1 | 24-05-2023 |
| | | | US | 2023150482 A1 | 18-05-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022106004 A

**Non-patent literature cited in the description**

- An Empirical Tire-Wear Model for Heavy-Goods Vehicles. *Tire Science and Technology*, June 2021, vol. 50 (3)